# EUROPEAN PATENT SPECIFICATION

(11) **EP 1 867 667 B1**
(45) Date of publication and mention of the grant of the patent: **31.10.2012**
(21) Application number: 07252373.1
(22) Date of filing: 12.06.2007
(51) Int. Cl.: C08G 2/28, C08K 5/34, C08L 59/00

(54) **Method for manufacturing stabilized polyacetal resin**
Herstellungsverfahren für stabilisiertes Polyacetalharz
Procédé de fabrication de résine polyacétalique stabilisée

(30) Priority: 13.06.2006 JP 2006163961
(43) Date of publication of application: 19.12.2007
(73) Proprietor: Polyplastics Co., Ltd., Tokyo 108-8280 (JP)
(72) Inventor: Harashina, Hatsuhiko c/o Polyplastics Co., Ltd, Shizuoka 416-8533 (JP); Nakao, Hiroaki c/o Polyplastics Co., Ltd, Shizuoka 416-8533 (JP)
(74) Representative: Peel, James Peter

(56) References cited:
- FR-A- 1 390 610
- GB-A- 793 673
- GB-A- 921 804
- GB-A- 1 032 922
- US-B1- 6 365 655
- US-B1- 6 506 850

## Description

### Technical Field

The present invention relates to a method for manufacturing stabilized polyacetal resin which reduces the quantity of unstable terminal group by applying heat treatment to a polyacetal resin containing the unstable terminal group in the presence of an agent to decompose the unstable terminal group, which agent is composed of a heterocyclic quaternary ammonium salt, also relates to thus obtained stabilized polyacetal resin, to a composition thereof, and to a molded article thereof.

### Background Art

Polyacetal resins are used as representative engineering plastics in wide fields centering on electric and electronic parts, automobile parts, and other varieties of machine parts owing to their excellent balance of mechanical properties, resistance to chemicals, slidability, and the like, and also to their easiness in working.

Polyacetal resins are grouped into copolymer and homopolymer. The former is manufactured by polymerizing formaldehyde or a cyclic polymer thereof as the raw material with a cyclic ether and/or a cyclic formal as the comonomer in the presence of a catalyst, while the latter is manufactured by polymerizing formaldehyde or a cyclic polymer thereof as the main monomer with a cyclic ether and/or formal as the comonomer in the present of a catalyst. The obtained polyacetal resin, however, raises environmental problems resulting from thermal instability because a part of the molecular terminals is hemiacetal group or formyl group, thus generating formaldehyde during molding caused by thermal decomposition of the unstable polyacetal resin, raises problems of decomposition of the obtained polyacetal resin because the generated formaldehyde is oxidized into formic acid in the molding step, of foaming of the molded article, and of generation of silver lines caused by degasification.

There are known methods of stabilizing the polyacetal resin having thermally unstable terminal group, such as the one to conduct acetylation, etherification, or urethanation of the terminal, and the one to decompose to remove the unstable terminal group and adjacent unstable terminal portion. For a copolymer, the method to decompose the unstable terminal group thus to stabilize the copolymer is adopted.

There are varieties of known methods for stabilizing the polyacetal resin by decomposing the unstable terminal group therein.

JP-B 40-10435, in claims, discloses a method of direct heat treatment of a crude polyacetal resin containing unstable terminal group within an insoluble medium.

The method, however, gives insufficient decomposition rate of the unstable terminal group, though the operation is conducted at a temperature near the melting point of the polyacetal resin to increase the decomposition rate, thus the decomposition treatment takes a time, and the decomposition efficiency is not satisfactory.

JP-A 60-63216, in claims 1 to 9, discloses a method of once melting a crude polyacetal resin with the addition of a stabilizer and/or an alkaline substance, followed by applying heat treatment thereto in an insoluble medium at 80°C or higher temperature while maintaining the heterogeneous system.

The method, however, has a problem that gives insufficient removal of unstable terminal group in the melting treatment step, and that the sufficient decomposition and removal of the residual unstable terminal during the heat treatment in the insoluble medium takes a time, and further has a problem of requirement of special apparatus with troublesome operation.

A known method for enhancing the decomposition of unstable terminal group is to conduct the decomposition thereof in the presence of: ammonia; an aliphatic amine such as triethylamine, tri-n-butylamine, and triethanolamine; a quaternary ammonium salt such as tetrabutyl ammonium hydroxide; a hydroxide of alkali metal or alkali earth metal; an inorganic weak acid salt; an organic acid salt; and the like.

British Patent No. 1034282, in claims, Example 8, discloses a method for obtaining a stabilized polyacetal copolymer by applying heating and dissolving treatment to a crude polyacetal copolymer in a solvent in the presence of a tetraalkyl ammonium hydroxide such as tetrabutyl ammonium hydroxide, thus removing the unstable terminal portion in the polymer.

The method gives an effectiveness of the quaternary ammonium hydroxide as the agent to decompose unstable terminal group to the crude polyacetal copolymer. The quaternary ammonium hydroxide is, however, a strong base, and it has problems of handling easiness and of color of polymer after stabilization. Furthermore, the British Patent No. 1034282 does not disclose quaternary ammonium salts other than the quaternary ammonium hydroxide.

JP-A-57-55916, in line 15 of lower left column to line 3 of lower right column on page 6, discloses a method for obtaining crude polyacetal copolymer through the copolymerization of a polyoxymethylene homopolymer with a cyclic formal using Lewis acid as the polymerization catalyst. The disclosure describes that the reaction is completed by adding a basic substance such as amine and quaternary ammonium salt, and that the polymer is heated with water or the like to obtain the stabilized polyacetal copolymer.

The disclosure, however, gives no detail example of quaternary ammonium salt, and no effect thereof.

JP-A-59-159812, in line 5 to line 12 of lower left column on page 5, discloses a continuous polymerization method of trioxane, in which trioxane and a cyclic ether are polymerized using Lewis acid as the polymerization catalyst, thus obtaining the crude polyacetal copolymer. The disclosure describes that the Lewis acid is neutralized and deactivated by a base substance such as amine and quaternary ammonium salt, followed by heating the polymer with water and the like to obtain the stabilized polyacetal copolymer from which the unstable terminal portion of the polymer was removed.

The disclosure, however, also gives no detail example of quaternary ammonium salt, and no effect thereof.

Japanese Patent No. 3087912, in Claims 1 to 22, line 32 to line 50 of column 11, and Examples 1 to 148, discloses a method for stabilizing an oxymethylene copolymer, in which an oxymethylene copolymer containing thermally unstable terminal portion is subjected to heat treatment in the presence of a specific quaternary ammonium salt represented by the formula [R¹R²R³R⁴N⁺]ₙXⁿ⁻.

However, the quaternary ammonium salt which is the characteristic of the patent is a quaternary ammoniums salt in which all of R¹ to R⁴ are independent hydrocarbon groups, specifically hydrocarbon groups such as substituted or non-substituted alkyl group, aryl group, aralkyl group, and alkylaryl group, and there is no disclosure about the heterocyclic quaternary ammonium salt in which any two or three of R¹ to R⁴, or all of them form a heterocyclic ring together with N⁺ atom.

FR 1 390 610 discloses a process for the formation of an interpolymer from formaldehyde and a polymerisation catalyst of N,N-diethyl piperidinium chloride.

US 6 365 655 a method for stabilizing a crude oxy-methylene copolymer having thermally unstable terminal groups, which comprises subjecting a crude oxymethylene copolymer to heat treatment in the presence of at least one quaternary ammonium compound.

As described above, known technologies have problems such that the reduction in the residual quantity of unstable terminal group is not satisfactory, that the balanced decomposition agent is not available, and that some decomposition agent has a limitation in safety, in the decomposition treatment method, and in the apparatuses. In addition, there is wanted a decomposition agent giving higher decomposition efficiency of the unstable terminal.

### Disclosure of the Invention

The present invention is finding an agent to decompose an unstable terminal group on stabilizing the terminals of a polyacetal resin having an unstable terminal group, which agent gives little limitation on the treatment method and apparatus and gives high decomposition efficiency with a small quantity, and to provide a method for manufacturing stabilized polyacetal resin using the agent, to provide a polyacetal resin whilst sufficiently decreasing the quantity of unstable terminal group using the method, and to provide a composition thereof and a molded article thereof.

The inventors of the present invention have found that the above problems are solved by applying heat treatment to a polyacetal resin having an unstable terminal group in the method as described in claim 1.

According to the present invention, a residual quantity of the unstable terminal group of the polyacetal resin can be satisfactorily decreased by using a small amount of agent to decompose the unstable terminal group, composed of a heterocyclic quaternary ammonium salt. In addition, the agent to decompose the unstable terminal group according to the present invention has a high safety and gives very little limitation on the decomposition treatment method and the apparatus.

### Detailed explanation of the invention

### Polyacetal resin

The polyacetal resin used for the present invention is a copolymer prepared by copolymerization of a main monomer which is trioxane which is a cyclic trimer of formaldehyde, with a comonomer component such as cyclic ether or cyclic formal such as ethylene oxide, propylene oxide, styrene oxide, oxetane, 1,3-dioxolan, diethylene glycol formal, 1,4-butanediol formal, 1,3,5-trioxepan or 1,3-dioxane; a multicomponent copolymer or a multicomponent copolymer having branched or cross-linked structure (specifically terpolymer), prepared by copolymerization of above main monomer and comonomer, further with a multicomponent-system monomer such as a compound having 1 to 4 glycidyl groups, such as ethyl glycidyl ether, butyl glycidyl ether, 2-ethyl hexyl glycidyl ether, phenyl glycidyl ether, 1,4-butanediol diglycidyl ether, hexamethylene glycol diglycidyl ether, bisphenol-A diglycidyl ether, glycerin mono-tri glycidyl ether, trimethylol propane mono-tri glycidyl ether, pentaerythritol mono-tetra glycidyl ether, dipentaerythritol mono-hexa glycidyl ether, (poly)ethylene glycol diglycidyl ether, (poly)propylene glycol diglycidyl ether or (poly)tetramethylene glycol diglycidyl ether; or a block copolymer which introduces a block component composed of other polymer. As of these, preferred ones are copolymer and terpolymer.

On preparing a multicomponent copolymer of copolymer or terpolymer using trioxan as the main monomer, the content of the comonomer is preferably in a range from 0.01 to 20% by mole, more preferably from 0.1 to 18% by mole, to the quantity of trioxan.

Applicable polymerization catalyst for manufacturing a polyacetal resin starting from the above raw materials is a cation-active polymerization catalyst such as Lewis acid, proton acid, a metal salt thereof, an ester thereof, and an anhydride thereof. Examples of Lewis acid are boric acid, halide of tin, titanium, phosphorus, arsenic, and antimony, specifically boron trifluoride, tin tetrachloride, titanium tetrachloride, phosphorus pentafluoride, phosphorus pentachloride, antimony pentafluoride, and a complex thereof or a salt thereof. Examples of the proton acid, metal salt thereof, ester thereof, and anhydride thereof are: a perchloric acid; a perfluoroalkane sulfonic acid (anhydride) such as trifluoromethane sulfonic acid (anhydride); an ester of perfluoroalkane sulfonic acid such as methyl trifluoromethane sulfonate; a rare earth metal salt of perfluoroalkane sulfonate such as scandium salt, a yttrium salt, and a lanthanum salt of trifluoromethane sulfonic acid; a metal salt of β-diketone such as bis(acetylacetone)copper or tris(acetylacetone)cobalt; a hetero-polyacid such as trimethyl oxonium hexafluorophosphate, phosphomolybdic acid, phosphotungstic acid, silicomolybdic acid or silicotungstic acid; and isopolyacid such as isopolymolybdic acid, isopolytungstic acid or an isopolyvanadic acid. As of these, preferred ones are: a boron trifluoride; a boron trifluoride hydrate; a coordinated complex of an organic compound containing oxygen atom or sulfur atom with boron trifluoride; a trifluoromethane sulfonate; and a heteropoly acid. Specifically preferred examples are boron trifluoride, boron trifluoride diethyl ether, boron trifluoride di-n-butyl ether, trifluoromethane sulfonate, phosphomolybdic acid, and phosphotungstic acid.

The use quantity of these polymerization catalysts is preferably in a range from 1 x 10⁻⁶ to 1 x 10⁻¹ % by mole, and more preferably from 5 x 10⁻⁶ to 1 x 10⁻² % by mole, to the total amount of monomer components (for example, trioxan and cyclic ether).

The polymerization method is not specifically limited. Any of batchwise and continuous methods can be applied, and bulk polymerization is preferred.

The molecular weight or the melt viscosity of the polymer is not limited if only the polymer is able to be melted and molded.

The polyacetal resin obtained by the above polymerization has an unstable terminal group at a part of the terminals of molecule, and the unstable terminal group is required to be efficiently decomposed and removed.

The characteristics of the terminal group and the stabilization mechanism of the polyacetal resin are roughly described below.

The unstable terminal group of the polyacetal resin is hemiacetal terminal group (=hemiformal group (-O-CH₂OH)) and formyl terminal group (=formyloxy group (-OCHO)).

The stable terminal group is alkoxy group such as methoxy group (-OCH₃) and hydroxyalkyl group having 2 or more carbon atoms, such as hydroxyethyl group (-CH₂CH₂OH) or hydroxybutyl group (-CH₂CH₂CH₂CH₂OH).

The methoxy group is formed by, for example, formal which is a molecular-weight adjuster being added in the polymerization step, typically methylal (=methylene dimethyl ether).

The terminal hydroxyalkyl group having 2 or more carbon atoms is originated from a cyclic ether or a cyclic formal, used as the comonomer, and is formed by the following steps. That is, on polymerizing a polyacetal resin to which oxyalkylene group originated from a cyclic ether or a cyclic formal is inserted into the repeating oxymethylene units, the polymerization firstly stops by a trace water or the like in the raw material, thus forming the hemiacetal terminal group.

When a polyacetal resin having the hemiacetal terminal group is subjected to heat treatment in the presence of an aqueous solution of alkaline substance such as aqueous solution of triethylamine, the unstable terminal group is decomposed. The decomposition proceeds from the terminal into the main chain, and when the decomposition reaches the position of oxyalkylene unit having 2 or more carbon atoms, the oxyalkylene unit at that position converts into a stable terminal of hydroxyalkyl group.

If a large quantity of hemiacetal terminal group remains as the unstable terminal group, formaldehyde is successively released from hemiacetal terminal group during compounding of stabilizer or under heating during molding, thus generating formaldehyde.

If the formyl terminal group is retained in a large quantity, the formyl terminal group is decomposed into hemiacetal terminal group during compounding of stabilizer and under heating during molding, receiving severe processing condition, thus generating formaldehyde as described above.

The present invention decreases the quantity of unstable terminal group by applying heat treatment to above-described polyacetal resin having an unstable terminal group in the presence of an agent to decompose the unstable terminal group, which agent is described in detail later. Thus obtained stabilized polyacetal resin contains hemiacetal terminal group by 1.0 mmol/kg or less, preferably 0.9 mmol/kg or less, more preferably 0.8 mmol/kg or less, and specifically preferably 0.7 mmol/kg or less, contains formyl terminal group by 1.2 mmol/kg or less, preferably 1.0 mmol/kg or less, and more preferably 0.8 mmol/kg or less, while the sum of them is 2.0 mmol/kg or less, preferably 1.8 mmol/kg or less, and more preferably 1.6 mmol/kg or less.

### Agent to decompose unstable terminal group

According to the present invention, the agent to decompose unstable terminal group, (hereinafter the agent may be abbreviated to the "decomposition agent" within the range of avoiding misunderstanding), used to decrease the quantity of unstable terminal group in the polyacetal resin is a heterocyclic quaternary ammonium salt. The heterocyclic quaternary ammonium salt may be any of non-aromatic heterocyclic quaternary ammonium salt and aromatic heterocyclic quaternary ammonium salt. Specifically, it is preferable to use a heterocyclic quaternary ammonium salt represented by the following formula (1):

[R¹R²R³R⁴N⁺]ₙYₙ₋ (1)

where, two or three, or all of R¹ to R⁴ form a heterocyclic ring together with N⁺ atom; among R¹ to R⁴, the one not contributing to the formation of the heterocyclic ring is any of C1 to C20 hydrocarbon groups which may contain a substituent; the hydrocarbon group is a linear or branched alkyl group, cycloalkyl group, aryl group or aralkyl group. The substituent includes hydroxyl group, acyl group, acyloxy group, alkoxy group, alkoxycarbonyl group, carboxyl group, amino group, amide group, vinyl group, allyl group, hydroxyalkyloxy group, alkoxyalkyloxy group, and/or polyalkyleneoxy group; Yⁿ⁻ is a pair anion; n is an integer of 1 or larger; and n quantity of [R¹R²R³R⁴N⁺l may be different from each other.

Although the pair anion of Yⁿ⁻ is not limited, a specifically preferred pair anion is hydroxyl ion (OH⁻), carbonic acid, organic carbonic acid, organic carboxylic acid, organic slufonic acid, organic phosphonic acid, organic phosphinic acid, acidic amide compound, acidic enol compound, phenol compound, alcoholic compound, acidic azole compound, hydroacid salt, and acid residue of oxoacid.

As of R¹ to R⁴, the organic residue not contributing to the formation of heterocyclic ring is preferably at least one organic residue selected from the group consisting of any of C1 to C10 alkyl groups (such as methyl group, ethyl group, propyl group or butyl group), any of C1 to C4 hydroxylalkyl groups (such as hydroxymethyl group, 2-hydroxypropyl group, 3-hydroxypropyl group or 2-hydroxy-1-methylethyl group), and any of C2 to C4 alkoxyalkyl groups (such as methoxymethyl group, ethoxymethyl group, methoxyethyl group or ethoxyethyl group).

Examples of the agent to decompose unstable terminal group are: a hydroxide of heterocyclic quaternary ammonium; a carbonate; a hydrogen carbonate; an organic carbonate (such as monoalkyl carbonate such as methyl carbonate, ethyl carbonate, isopropyl carbonate or n-butyl carbonate, monocycloalkyl carbonate, monoaryl carbonate such as phenyl carbonate, monoralkyl carbonate such as benzyl carbonate or monoaralkyl carbonate); an organic carboxylate (such as any of C1 to C20 organic carboxylates such as formate, acetate, propionate, benzoate, phthalate, oxalate, glycolate, citrate or tartrate, nitrilo triacetate, amino carboxylate such as ethylenediamine tetra acetate, diethylenetriamine penta acetate, triethylenediamine hexa acetate, 1,3-propanediamine tetra acetate, glycoletherdiamine tetra acetate, dicarboxymethyl glutamate, ethylenediamine disuccinate, hydroxyethyl ethylenediamine triacetate, 1,3-diamino-2-hydroxy propane tetra acetate or hydroxyethyl imino diacetate; and a polymer polycarboxylate such as poly(meth)acrylate or olefin-poly(meth)acrylic acid copolymer salt, obtained by polymerization or copolymerization of unsaturated monomer (such as acrylic acid, methacrylic acid, maleic acid, fumaric acid or itaconic acid) having carboxyl group); an organic sulfonate (such as methane sulfonate, trifluoromethane sulfonate, ethane sulfonate, p-toluene sulfonate); an organic phosphonate (such as methyl phosphonate, ethyl phosphonate or phenyl phosphonate); an organic sulfinate (such as dimethyl phosphinate, diethyl phosphinate, methylethyl phosphinate or diphenyl phosphinate); an acidic amide compound salt (such as isocyanulate, phthalic imidate, pyromellitic acid dimidate, hydantoate, 5,5-dimethyl hydantoate, allantoate, barbiturate, alloxanate, glycol urylate, benzimidazolonate, uric acid salt, uracilate, thyminate, saccharin salt, acesulfame salt, and bis-trifluoromethane sulfonyl imidate); an acidic enol compound salt (such as β-diketone compound salt such as acetylacetonate, diacetylacetonate, acetoacetic acid methyl salt or acetoacetic ethyl salt, dehydro acetate, α-acetyl-γ-butylolactonate, 1,3-cyclohexane dionate, dimedonate, Meldrum's acid salt, sualic acid salt, 2,3-dihydroxy-2-cyclopentene-1-one, (iso)ascorbic acid or kojic acid); a phenol compound salt (such as phenol salt, biphenol salt, bisphenol-A salt or hindered phenol salt); an alcoholic compound salt (such as methanol salt (methoxide), ethanol salt (ethoxide), ethylene glycol salt, propylene glycol salt, butylene glycol salt, glycerin salt or pentaerythritol salt); an acidic azole compound salt (such as purine, theophyline, benzoimidazole salt, xanthine salt, hypoxanthine salt, guanine salt, 1H-tetrazole salt, 5,5'-bi-1H-tetrazole salt or 5-phenyl-1H-tetrazole salt); a hydroacid salt (such as hydrofluoric acid salt, hydrochloric acid salt, bromic acid salt, hydroiodic acid salt, tetrafluoric borate, hexafluoric phosphate or tetraphenyl borate) ; and an oxoacid salt (such as sulfate, nitrate, phosphate or borate).

Further specific agent to decompose unstable terminal group includes: hydroxide (OH⁻), carbonate, hydrogencarbonate, organic carbonate (typically methyl carbonate and ethyl carbonate), organic carboxylate (typically formate, acetate, propionate, and polyacrylate), acidic amide compound salt (typically isocyanulate and phthalic imidate), acidic enol compound salt (typically acetylacetonate, acetomethylacetate, and acetoethylacetate), phenol compound salt (typically bisphenol-A salt and hindered phenol salt), alcohol compound salt (typically methanol salt and ethanol salt), hydroacid salt (typically hydrochloric acid salt), and oxoacid salt (typically borate) of at least one heterocyclic quaternary ammonium selected from pyrrolidinium, piperidinium, piperazinium, morpholinium, bicyclo-based quaternary ammonium, spiro-based quaternary ammonium, imidazolinium, and pyridinium.

Those heterocyclic quaternary ammonium salts can be used by mixing two or more of them as double salt or complex salt.

Examples of the pyrrolidinium salt are N,N-dimethyl pyrrolidinium salt, N,N-diethyl pyrrolidinium salt, N,N-dipropyl pyrrolidinium salt, N,N-dibutyl pyrrolidinium salt, N,N-diphenyl pyrrolidinium salt, N-methyl-N-ethyl pyrrolidinium salt, N-methyl-N-(hydroxymethyl)pyrrolidinium salt, N-methyl-N-(2-hydroxyethyl)pyrrolidinium salt, N-ethyl-N-(2-hydroxyethyl)pyrrolidinium salt, N-methyl-N-(2-hydroxypropyl)pyrrolidinium salt, N,N-bis(2-hydroxyethyl)pyrrolidinium salt, N,N-bis(2-hydroxypropyl)pyrrolidinium salt, N,N-bis(2-hydroxyethyloxyethyl)pyrrolidinium salt, N,N-bis(2-polyethyleneoxyethyl)pyrrolidinium salt, N,N-bis(2-polypropyleneoxypropyl)pyrrolidinium salt, N-methyl-N-(methoxymethyl)pyrrolidinium salt, N-methyl-N-(ethoxymethyl)pyrrolidinium salt, N-methyl-N-(2-methoxyethyl)pyrrolidinium salt, N-methyl-N-(2-ethoxyethyl)pyrrolidinium salt, N-methyl-N-(2-propoxyethyl)pyrrolidinium salt, N-methyl-N-(2-butoxyethyl)pyrrolidinium salt, N-ethyl-N-(methoxymethyl)pyrrolidinium salt, N-ethyl-N-(ethoxymethyl)pyrrolidinium salt, N-ethyl-N-(2-methoxyethyl)pyrrolidinium salt, N-ethyl-N-(2-ethoxyethyl)pyrrolidinium salt, N-ethyl-N-(2-propoxyethyl)pyrrolidinium salt, N-ethyl-N-(2-butoxyethyl)pyrrolidinium salt, N,N-bis(methoxymethyl)pyrrolidinium salt, N,N-bis(ethoxymethyl)pyrrolidinium salt, N,N-bis(2-methoxyethyl)pyrrolidinium salt, and N,N-bis(2-ethoxyethyl)pyrrolidinium salt.

Examples of piperidinium salt are N,N-dimethyl piperidinium salt, N,N-diethyl piperidinium salt, N,N-dipropyl piperidinium salt, N,N-dibutyl piperidinium salt, N,N-diphenyl piperidinium salt, N-methyl-N-ethyl piperidinium salt, N-methyl-N-propyl piperidinium salt, N-methyl-N-(hydroxymethyl)piperidinium salt, N-methyl-N-(2-hydroxyethyl)piperidinium salt, N-ethyl-N-(2-hydroxyethyl)piperidinium salt, N-methyl-N-(2-hydroxypropyl)piperidinium salt, N,N-bis(2-hydroxyethyl)piperidinium salt, N,N-bis(2-hydroxypropyl)piperidinium salt, N,N-bis(2-hydroxyethyloxyethyl)piperidinium salt, N,N-bis(2-polyethyleneoxyethyl)piperidinium salt, N,N-bis(2-polypropyleneoxypropyl)piperidinium salt, N-methyl-N-(methoxymethyl)piperidinium salt, N-methyl-N-(ethoxymethyl)piperidinium salt, N-methyl-N-(2-methoxyethyl)piperidinium salt, N-methyl-N-(2-ethoxyethyl)piperidinium salt, N-methyl-N-(2-propoxyethyl)piperidinium salt, N-methyl-N-(2-butoxyethyl)piperidinium salt, N-ethyl-N-(methoxymethyl)piperidinium salt, N-ethyl-N-(ethoxymethyl)piperidinium salt, N-ethyl-N-(2-methoxyethyl)piperidinium salt, N-ethyl-N-(2-ethoxyethyl)pyrrolidinium salt, N-ethyl-N-(2-propoxyethyl)piperidinium salt, N-ethyl-N-(2-butoxyethyl)piperidinium salt, N,N-bis(methoxymethyl)piperidinium salt, N,N-bis(ethoxymethyl)piperidinium salt, N,N-bis(2-methoxyethyl)piperidinium salt, and N,N-bis(2-ethoxyethyl)piperidinium salt.

Examples of piperazinium salt are N,N-dimethyl piperazinium salt, N,N-diethyl piperazinium salt, N,N-dipropyl piperazinium salt, N,N-dibutyl piperazinium salt, N,N-diphenyl piperazinium salt, N-methyl-N-ethyl piperazinium salt, N-methyl-N-propyl piperazinium salt, N-methyl-N-(hydroxymethyl)piperazinium salt, N-methyl-N-(2-hydroxyethyl)piperazinium salt, N-ethyl-N-(2-hydroxyethyl)piperazinium salt, N-methyl-N-(2-hydroxypropyl)piperazinium salt, N,N-bis(2-hydroxyethyl)piperazinium salt, N,N-bis(2-hydroxypropyl)piperazinium salt, N,N-bis(2-hydroxyethyloxyethyl)piperazinium salt, N,N-bis(2-polyethyleneoxyethyl)piperazinium salt, N,N-bis(2-polypropyleneoxypropyl)piperazinium salt, N-methyl-N-(methoxymethyl)piperazinium salt, N-methyl-N-(ethoxymethyl)piperazinium salt, N-methyl-N-(2-methoxyethyl)piperazinium salt, N-methyl-N-(2-ethoxyethyl)piperazinium salt, N-methyl-N-(2-propoxyethyl)piperazinium salt, N-methyl-N-(2-butoxyethyl)piperazinium salt, N-ethyl-N-(methoxymethyl)piperazinium salt, N-ethyl-N-(ethoxymethyl)piperazinium salt, N-ethyl-N-(2-methoxyethyl)piperazinium salt, N-ethyl-N-(2-ethoxyethyl)piperazinium salt, N-ethyl-N-(2-propoxyethyl)piperazinium salt, N-ethyl-N-(2-butoxyethyl)piperazinium salt, N,N-bis(methoxymethyl)piperazinium salt, N,N-bis(ethoxymethyl)piperazinium salt, N,N-bis(2-methoxyethyl)piperazinium salt, N,N-bis(2-ethoxyethyl)piperazinium salt, N,N,N'-trimethyl piperazinium salt, N,N,N'-triethyl piperazinium salt, N,N'-dimethyl-N-(hydroxymethyl)piperazinium salt, N,N'-dimethyl-N-(2-hydroxyethyl)piperazinium salt, N,N'-dimethyl-N-(2-hydroxypropyl)piperazinium salt, N,N'-dimethyl-N-(2-hydroxyethyloxyethyl)piperazinium salt, N,N'-dimethyl-N-(2-polyethyleneoxyethyl)piperazinium salt, N,N'-dimethyl-N-(2-polypropyleneoxypropyl)piperazinium salt, N,N'-dimethyl-N-(methoxymethyl)piperazinium salt, N,N'-dimethyl-N-(2-methoxyethyl)piperazinium salt, N,N'-dimethyl-N-(2-ethoxyethyl)piperazinium salt, N-methyl-N,N'-bis(hydroxymethyl)piperazinium salt, N-methyl-N,N'-bis(2-hydroxyethyl)piperazinium salt, N-methyl-N,N'-bis(2-hydroxypropyl)piperazinium salt, N-methyl-N,N'-bis(methoxymethyl)piperazinium salt, N-methyl-N,N'-bis(methoxyethyl)piperazinium salt, N-methyl-N,N'-bis(2-ethoxyethyl)piperazinium salt, N,N,N',N'-tetramethyl piperazinium salt, N,N,N',N'-tetraethyl piperazinium salt, N,N,N',N'-tetrapropyl piperazinium salt, N,N,N',N'-tetrabutyl piperazinium salt, N,N,N',N'-tetraphenyl piperazinium salt, N,N,N'-trimethyl-N'-(hydroxymethyl)piperazinium salt, N,N,N'-trimethyl-N'-(2-hydroxyethyl)piperazinium salt, N,N,N'-trimethyl-N'-(2-hydroxypropyl)piperazinium salt, N,N,N'-trimethyl-N'-bis(methoxymethyl)piperazinium salt, N,N,N'-trimethyl-N'-bis(2-methoxyethyl)piperazinium salt, N,N,N'-trimethyl-N'-bis(2-ethoxyethyl)piperazinium salt, N,N'-dimethyl-N,N'-dipropyl piperazinium salt, N,N'-dimethyl-N,N'-bis(hydroxymethyl)piperazinium salt, N,N'-dimethyl-N,N'-bis(2-hydroxyethyl)piperazinium salt, N,N'-dimethyl-N,N'-bis(2-hydroxypropyl)piperazinium salt, N,N'-dimethyl-N,N'-bis(methoxymethyl)piperazinium salt, N,N'-dimethyl-N,N'-bis(2-methoxyethyl)piperazinium salt, N,N'-dimethyl-N,N'-bis(2-ethoxyethyl)piperazinium salt, N-methyl-N,N',N'-tris(hydroxymethyl)piperazinium salt, N-methyl-N,N',N'-tris(2-hydroxyethyl)piperazinium salt, N-methyl-N,N'-N'-tris(2-hydroxypropyl)piperazinium salt, N-methyl-N,N',N'-tris(methoxymethyl)piperazinium salt, N-methyl-N,N',N'-tris(2-methoxyethyl)piperazinium salt, N-methyl-N,N',N'-tris(2-ethoxyethyl)piperazinium salt, N,N,N',N'-tetrakis(hydroxymethyl)piperazinium salt, N,N,N',N'-tetrakis(2-hydroxyethyl)piperazinium salt, N,N,N',N'-tetrakis(2-hydroxypropyl)piperazinium salt, N,N,N',N'-tetrakis(2-hydroxyethyloxyethyl)piperazinium salt, N,N,N',N'-tetrakis(2-polyethyleneoxyethyl)piperazinium salt, N,N,N',N'-tetrakis(2-polyploleneoxypropyl)piperazinium salt, N,N,N',N'-tetrakis(methoxymethyl)piperazinium salt, N,N,N',N'-tetrakis(2-methoxyethyl)piperazinium salt, and N,N,N',N'-tetrakis(2-ethoxyethyl)piperazinium salt.

Examples of morpholinium salt are N,N-dimethyl morpholinium salt, N,N-diethyl morpholinium salt, N,N-dipropyl morpholinium salt, N,N-dibutyl morpholinium salt, N,N-diphenyl morpholinium salt, N-methyl-N-ethyl morpholinium salt, N-methyl-N-(hydroxymethyl)morpholinium salt, N-methyl-N-(2-hydroxyethyl)morpholinium salt, N-ethyl-N-(2-hydroxyethyl)morpholinium salt, N-methyl-N-(2-hydroxypropyl)morpholinium salt, N-methyl-N-(2-hydroxyethyloxyethyl)morpholinium salt, N-methyl-N-(2-polyethyleneoxyethyl)morpholinium salt, N-methyl-N-(2-polypropyleneoxypropyl)morpholinium salt, N,N-bis(2-hydroxyethyl)morpholinium salt, N,N-bis(2-hydroxypropyl)morpholinium salt, N,N-bis(2-hydroxyethyloxyethyl)morpholinium salt, N,N-bis(2-polyethyleneoxyethyl)morpholinium salt, N,N-bis(2-polypropyleneoxypropyl)morpholinium salt, N-methyl-N-(methoxymethyl)morpholinium salt, N-methyl-N-(ethoxymethyl)morpholinium salt, N-methyl-N-(2-methxoethyl)morpholinium salt, N-methyl-N-(2-ethoxyethyl)morpholinium salt, N-methyl-N-(2-propoxyethyl)morpholinium salt, N-methyl-N-(2-butoxyethyl)morpholinium salt, N-ethyl-N-(methoxymethyl)morpholinium salt, N-ethyl-N-(ethoxymethyl)morpholinium salt, N-ethyl-N-(2-methoxyethyl)morpholinium salt, N-ethyl-N-(2-ethoxyethyl)morpholinium salt, N-ethyl-N-(2-propoxyethyl)morpholinium salt, N-ethyl-N-(2-butoxyethyl)morpholinium salt, N,N-bis(methoxymethyl)morpholinium salt, N,N-bis(ethoxymethyl)morpholinium salt, N,N-bis(2-methoxyethyl)morpholinium salt, and N,N-bis(2-ethoxyethyl)morpholinium salt.

Examples of bicyclo-based quaternary ammonium salt are salt of 1-methyl-1-azabicyclo[2,2,2]octane, salt of 1-ethyl-1-azabicyclo[2,2,2]octane, salt of 1-propyl-1-azabicyclo[2,2,2]octane, salt of 1-butyl-1-azabicyclo-[2,2,2]octane, salt of 1-phenyl-1-azabicyclo[2,2,2]octane, salt of 1-hydroxymethyl-1-azabicyclo[2,2,2]octane, salt of 1-(2-hydroxyethyl)-1-azabicyclo[2,2,2]octane, salt of 1-(2-hydroxypropyl)-1-azabicyclo[2,2,2]octane, salt of 1-(2-hydroxyethyloxyethyl)-1-azabicyclo[2,2,2]octane, salt of 1-(2-polyethyleneoxyethyl)-1-azabicyclo[2,2,2]octane, salt of 1-(2-polypropyleneoxypropyl)-1-azabicyclo[2,2,2]-octane, salt of 1-methoxymethyl-1-azabicyclo[2,2,2]octane, salt of 1- (2-methoxyethyl) -1-azabicyclo [2,2,2] octane, salt of 1-(2-ethoxyethyl)-1-azabicyclo[2,2,2]octane, salt of 1-methyl-1-azabicyclo[2,2,2]octane-3-ol, salt of 1-ethyl-1-azabicyclo[2,2,2]ocatane-3-ol, salt of 1-propyl-1-azabicyclo[2,2,2]octane-3-ol, salt of 1-butyl-1-azabicyclo[2,2,2]octane-3-ol, salt of 1-phenyl-1-azabicyclo[2,2,2]octane-3-ol, salt of 1-hydroxymethyl-1-azabicyclo[2,2,2]octane-3-ol, salt of 1-(2-hydroxyethyl)-1-azabicyclo[2,2,2]octane-3-ol, salt of 1-(2-hydroxypropyl)-1-azabicyclo[2,2,2]octane-3-ol, salt of 1-(2-hydroxyethyloxyethyl)-1-azabicyclo[2,2,2]octane-3-ol, salt of 1-(2-polyethyleneoxyethyl)-1-azabicyclo[2,2,2]-octane-3-ol, salt of 1-(2-polypropyleneoxypropyl)-1-azabicyclo[2,2,2]octane-3-ol, salt of 1-methoxymethyl-1-azabicyclo[2,2,2]octane-3-ol, salt of 1-(2-methoxyethyl)-1-azabicyclo[2,2,2]octane-3-ol, salt of 1-(2-ethoxyethyl)-1-azabicyclo[2,2,2]octane-3-ol, salt of 1-methyl-1,4-diazabicyclo[2,2,2]octane, salt of 1-ethyl-1,4-diazabicyclo[2,2,2]octane, salt of 1-propyl-1,4-diazabicyclo[2,2,2]octane, salt of 1-butyl-1,4-diazabicyclo[2,2,2]octane, salt of 1-phenyl-1,4-diazabicyclo[2,2,2]octane, salt of 1-hydroxymethyl-1,4-diazabicyclo[2,2,2]octane, salt of 1-(2-hydroxyethyl)-1,4-diazabicyclo[2,2,2]octane, salt of 1-(2-hydroxypropyl)-1,4-diazabicyclo[2,2,2]octane, salt of 1-(2-hydroxyethyloxyethyl)-1,4- diazabicyclo[2,2,2]octane, salt of 1-(2-polyethyleneoxyethyl)-1,4-diazabicyclo[2,2,2]-octane, salt of 1-(2-polypropyleneoxypropyl)-1,4-diazabicyclo[2,2,2]octane, salt of 1-methoxymethyl-1,4-diazabicyclo[2,2,2]octane, salt of 1-(2-methoxyethyl)-1,4-diazabicyclo[2,2,2]octane, salt of 1-(2-ethoxyethyl)-1,4-diazabicyclo[2,2,2]octane, salt of 1,4-dimethyl-1,4-diazabicyclo[2,2,2]octane, salt of 1,4-diethyl-1,4-diazabicyclo[2,2,2]octane, salt of 1,4-dipropyl-diethyl-1,4-diazabicyclo[2,2,2]octane, salt of 1,4-dibutyl-1,4-diazabicyclo[2,2,2]octane, salt of 1,4-diphenyl-1,4-diazabicyclo[2,2,2]octane, salt of 1,4-bis(hydroxymethyl)-1,4-diazabicyclo[2,2,2]octane, salt of 1,4-bis(2-hydroxyethyl)-1,4-diazabicyclo[2,2,2]octane, salt of 1,4-bis(2-hydroxypropyl)-1,4-diazabicyclo[2,2,2]octane, salt of 1,4-bis(2-hydroxyethyloxyethyl)-1,4-diazabicyclo-[2,2,2]octane, salt of 1,4-bis(2-polyethylenoxyethyl)-1,4-diazabicyclo[2,2,2]octane, salt of 1,4-bis(2-polypropyleneoxypropyl)-1,4-diazabicyclo[2,2,2]-octane, salt of 1,4-bis(methoxymethyl)-1,4-diazabicyclo-[2,2,2]octane, salt of 1,4-bis(methoxyethyl)-1,4-diazabicyclo[2,2,2]octane, salt of 1,4-bis(2-ethoxyethyl)-1,4-diazabicyclo[2,2,2]octane, salt of 1-methyl-1,5-diazabicyclo[4,3,0]nonene-5, salt of 1-ethyl-1,5-diazabicyclo[4,3,0]nonene-5, salt of 1-(2-hydroxyethyl)-1,5-diazabicyclo[4,3,0]nonene-5, salt of 1-(2-methoxyethyl)-1,5-diazabicyclo[4,3,0]nonene-5, salt of 1-(2-hydroxypropyl)-1,5-diazabicyclo[4,3,0]nonene-5, salt of 1-methyl-1,8-diazabicyclo[5,4,0]undecene-7, salt of 1-ethyl-1,8-diazacyclo[5,4,0]undecene-7, salt of 1-(2-hydroxyethyl)-1,8-diazabicyclo[5,4,0]undecene-7, salt of 1-(2-methoxyethyl)-1,8-dizabicyclo[5,4,0]undecene-7, and salt of 1-(2-hydroxypropyl)-1,8-diazabicyclo[5,4,0]undecene-7.

Examples of spiro-based quaternary ammonium salt are spiro-1,1'-bipyrrolidinium salt, spiro-1,1'-bipiperidinium salt, spiro-1,1'-bimorphodinium salt, piperidine-1-spiro-1'-pyrrolidinium salt, morpholine-1-spiro-1'-pyrrolidinium salt, morpholine-1-spiro-1'-piperidinium salt, morpholine-1-spiro-1'-piperazinium salt, azacyclobutyl-1-spiro-1'-morpholinium salt, azacyclopenthyl-1-spiro-1'-morpholinium salt, azacyclohexyl-1-spiro-1'-morpholinium salt, and bis(morpholine-1-spiro)-1',4'-piperazinium salt.

Examples of imidazolium salt are 1,3-dimethyl imidazolium salt, 1-methyl-3-ethyl imidazolium salt, 1-methyl-3-propyl imidazolium salt, 1-methyl-3-butyl imidazolium salt, 1-methyl-3-hexyl imidazolium salt, 1-methyl-3-octyl imidazolium salt, 1-methyl-3-phenyl imidazolium salt, 1-methyl-3-(2-hydroxyethyl)imidazolium salt, 1-methyl-3-(2-hyroxylpropyl)imidazolium salt, 1-methyl-3-methoxymethyl imidazolium salt, 1-methyl-3-(2-mthoxyethyl)imidazolium salt, 1-methyl-3-(2-hydroxyethyloxyethyl)imidazolium salt, 1-methyl-3-(2-polyethyleneoxyethyl)imidazolium salt, 1-methyl-3-(2-polypropyleneoxypropyl)imidazolium salt, 1,3-bis(2-hydroxyethyl)imidazolium salt, 1,3-bis(2-hydroxyethyloxyethyl)imidazolium salt, 1,3-bis(2-polyethyleneoxyethyl)imidazolium salt, 1,3-bis(2-polypropyleneoxypropyl)imidazolium salt, 1,3-bis(2-hydoxypropyl)imidazolium salt, 1,3-bis(methoxymethyl)imidazolium salt, 1,3-bis(ethoxymethyl)imidazolium salt, 1,3-bis(2-methoxyethyl)imidazolium salt, 1,3-bis(2-methoxyethyloxyethyl)imidazolium salt, 1,2,3-trimethyl imidazolium salt, 1,2-dimethyl-3-ethyl imidazolium salt, 1,2-dimethyl-3-propyl imidazolium salt, 1,2-dimethyl-3-butyl imidazolium salt, 1,2-dimethyl-3-hexyl imidazolium salt, 1,2-dimethyl-3-octyl imidazolium salt, 1,2-dimethyl-3-(2-hydroxyethyl)imidazolium salt, and 1,2-dimethyl-3-(2-hydroxypropyl)imidazolium salt.

Examples of pyridinium salt are 1-methyl pyridinium salt, 1-ethyl pyridinium salt, 1-propyl pyridinium salt, 1-butyl pyridinium salt, 1-hexyl pyridinium salt, 1-octyl pyridinium salt, 1-phenyl pyridinium salt, 1-(2-hydroxyethyl)pyridinium salt, 1-(2-hydroxypropyl)pyridinium salt, 1-methoxymethyl pyridinium salt, 1-(2-methoxyethyl)pyridinium salt, (2-ethoxyethyl)pyridinium salt, 1-(2-hydroxyethyloxyethyl)pyridinium salt, 1-(2-polyethyleneoxyethyl)pyridinium salt, and 1-(2-polypropyleneoxypropyl)pyridinium salt.

The heterocyclic quaternary ammonium salts which are described in the following patent publications and which are classified to the present invention are also preferred ones: JP-A-52-17484, JP-A-58-10542, JP-A-61-207420, JP-A-63-280045, JP-A-1-197462, JP-A-3-277632, JP-A-7-1832, JP-A-8-321439, JP-A-9-202752, JP-A-9-301935, JP-A-2001-256828, JP-A-2002-50414, JP-A-2002-53562, JP-A-2003-327566, JP-A-2003-335780, JP-A-2004-70061, JP-A-2004-264401, JP-A-2004-264402, JP-A-2004-269804, JP-A-2004-269805, JP-A-2004-359578, JP-A-2005-175239, JP-A-2005-222973, JP-A-2005-222974, JP-A-2005-222975, USP 3010963, USP 3073827, USP 3993652, USP 4040992, USP 4785025, USP 4904629, WO 2002/076924, WO 2005/003108, WO 2005/042466 and others.

Furthermore, as the agent to decompose unstable terminal group, a hydroxide of non-aromatic heterocyclic quaternary ammonium and/or a proton acid salt of non-aromatic heterocyclic quaternary ammonium, (such as organic carbonate, organic carboxylate, acidic amide compound salt, or β-diketone compound salt), are more preferable.

### Method for treating unstable terminal group

The method for manufacturing the stabilized polyacetal resin according to the present invention decreases the quantity of unstable terminal group by applying heat treatment to the polyacetal resin, having an unstable terminal group, which is polymerized in above-operation in the presence of at least one of above-described decomposition agents.

The use quantity of the decomposition agent per 1 kg of polyacetal resin depends on the kind and quantity of existing unstable terminal group, kind of decomposition agent, treatment state, and treatment condition (temperature, time, contact rate, and the like). When the treatment is conducted in the molten state of polyacetal resin, however, the use quantity of the decomposition agent is 0.005 to 3.5 mmol as ammonium nitrogen atom (N⁺) providing the heterocyclic quaternary ammonium salt, preferably 0.01 to 3 mmol, and more preferably 0.05 to 2 mmol to 1 kg of the polyacetal resin containing an unstable terminal group.

If necessary, a known decomposition agent can be used together with the above decomposition agent.

The heat treatment may be conducted before or after deactivating the polymerization catalyst remained in the polyacetal resin after the polymerization. The heat treatment can be applied to the polyacetal resin which contains an unstable terminal group after a stabilization treatment other than that of the present invention.

The deactivation of the polymerization catalyst is conducted by charging the polyacetal resin after polymerization into an aqueous solution or an organic solvent, which solution or solvent contains at least one catalyst-deactivator such as amine such as ammonia and alkylamine, hydroxide of alkali metal or alkali earth metal, inorganic salt, and organic salt, thereby allowing standing or agitating the mixture in the slurry state for generally one minute to six hours. The slurry after the catalyst deactivation is filtered and rinsed to remove unreacted monomer, catalyst deactivator, and the like, which is then used or which is further dried before use.

Alternatively, the polymerization catalyst can be deactivated by bringing the polyacetal resin contact with vapor of above amines, or by mixing and agitating the polyacetal resin with at least one substance selected from hindered amine, aminotriazine, triphenylphosphine, calcium hydroxide, magnesium hydroxide, and the like.

When the polymerization catalyst is not deactivated, the polyacetal resin after polymerization is heated to a temperature not higher than the melting point of the polyacetal resin in an inert gas atmosphere, thus vaporizing the polymerization catalyst to decrease the quantity thereof before use. The deactivation of polymerization catalyst and the vaporization to decrease the quantity of polymerization catalyst may be given after crushing the polyacetal resin after polymerization.

On applying the treatment of unstable terminal group of the polyacetal resin according to the present invention, conventional treatment methods and corresponding apparatuses can be selected if only the above-described compound as the agent to decompose unstable terminal group is adopted.

According to the method for decomposing unstable terminal group, the heating and decomposing treatment by the decomposition agent is conducted, after applying necessary treatments such as neutralization of catalyst after the polymerization, in a molten state of polyacetal resin or in a slurry state of polyacetal resin in a solvent.

A method for treating polyacetal resin in molten state is to melt the resin in a single or twin screw extruder, for example, thus processing the resin at a temperature between the melting point thereof and 250°C, at a retention time of the resin between 20 seconds and 20 minutes. If the treatment is done below the lower limit of above-given conditions, the stabilization of the resin becomes insufficient, and if the treatment is done above the upper limit thereof, the resin may be decomposed or colored. The addition of decomposition agent can be given before or after melting the polyacetal resin, or can be given both of before and after melting thereof. The quantity of adding decomposition agent can be divided to conduct multistage feeding.

For charging the decomposition agent to the polyacetal resin before melting, a specified quantity of aqueous solution of the decomposition agent, or solution thereof of organic solvent such as methanol and ethanol, or alcohol aqueous solution thereof, to the quantity of the crude polyacetal resin having unstable terminal group is added uniformly as far as possible before mixing them. The mixing of these materials can be done by an ordinary mixer of horizontal cylinder type, V-shape type, ribbon type, paddle type, high speed flow type, and the like. The mixture can be directly subjected to melting treatment without drying, or may be preliminarily treated to remove the solvent by heating or evacuating before the melting treatment. The decomposition agent solution may be supplied by injection or the like from the feed opening of the extruder and/or from interim feed opening of the extruder. The decomposition agent solution can be supplied by multiple divided-feeding.

The resin can be added to the above solution to form slurry, and the slurry can be filtered to dry to let the decomposition agent adhere to the resin, thus charging the treatment agent.

A method to add the decomposition agent to the polyacetal resin in molten state after melting the polyacetal resin is to feed and/or inject the above decomposition agent and the solvent separately, or in a state of solution of them.

On conducting the decomposition treatment in a molten state, there can be added, at need, one or more additives selected from the group given below, by 0.001 to 5 parts by weight, preferably 0.005 to 2 parts by weight, to 100 parts by weight of the resin. The group is: an antioxidant (such as hindered phenol or hindered amine); a decomposition accelerator (such as water; methanol; an amine such as trimethylamine, triethylamine, tributyl amine, mono-triethanol amine or diethylethanol amine; an alkali earth metal compound such as magnesium hydroxide, calcium hydroxide, magnesium oxide, calcium (hydrogen)carbonate or magnesium (hydrogen) carbonate; a quaternary ammonium compound such as tetramethylammonium hydroxide, choline hydroxide, (2-hydroxyethyl)triethyl ammonium hydroxide, and their proton acid salt (such as inorganic salt such as carbonate, hydrogencarbonate or hydrochloric acid salt; organic carboxylate such as formate, acetate, propionate, tartrate, citrate or polyacrylate; a phenol compound salt; a phenol compound salt; an acidic amide compound salt; or a β-diketone compound salt); or an intramolecular quaternary ammonium compound such as betaine, D-, L-, D/L-carnitine); and a color-stabilizer (such as proton acid such as above-described organic carboxylic acid, acidic amide compound, acidic enol, phenol compound or oxoacid (typically ortho-boric acid, metha-boric acid, tetra-boric acid) or boron compound (such as boron oxide or boric acid metal salt), which provide pair anion, according to the present invention.

The polyacetal resin after decomposing and removing the unstable terminal portion is further treated under a reduced pressure to remove the formaldehyde generated by decomposition of the resin, the unreacted monomer, the oligomer, the decomposition agent, and the like through the vent opening of the extruder, then the resin is cooled and cut by a strand cutter or a die-face cutter to become pellets.

When the polyacetal is treated in a slurry state, the polyacetal is added to aqueous, alcohol, or aqueous alcohol solution of the decomposition agent so as the quantity of the decomposition agent to the resin to become, as ammonium nitrogen atom (N⁺) providing the heterocyclic quaternary ammonium salt, 0.005 to 35 mmol, preferably 0.01 to 30 mmol, and more preferably 0.1 to 25 mmol, and then is subjected to heat treatment under normal pressure or positive pressure.

The slurry concentration is in a range from 3 to 70% by weight, preferably 5 to 60% by weight, and the heating temperature is 60°C or above and below the melting point of the resin, preferably in a range from 80°C to 140°C, and the heating time is in a range from 2 minutes to 30 hours, preferably from 20 minutes to 20 hours.

The polyacetal after treatment is subjected to filtration and rinse to remove the formaldehyde generated by decomposition of the resin, the unreacted monomer, the oligomer, the decomposition agent, and the like, and then is dried similar to the treatment in the molten state, thus obtaining the stabilized polyacetal resin product.

The present invention provides a stabilized polyacetal resin which has the number average molecular weight of 5000 or more, the quantity of hemiacetal terminal group of 1.0 mmol/kg or less and/or the quantity of formyl terminal group of 1.2 mmol/kg or less.

As described above, the polyacetal resin containing a small quantity of unstable terminal group is not available in the prior art, and the resin is applicable to new uses where there are requirements of significant reduction of the quantity of formaldehyde generation and significant reduction of smell or unpleasant odor.

The obtained stabilized polyacetal resin can be used for molding thereof after preparing a polyacetal resin composition by adding, at need, an additive of (a), (b), (c) etc. and by mixing it in an extruder or the like: (a) 0.001 to 5 parts by weight of at least one substance selected from an antioxidant, a formaldehyde scavenger, a formic acid scavenger, an anti-weathering agent, a light stabilizer, a processing stabilizer and a crystal nucleator; (b) 0 to 100 parts by weight of at least one substance selected from the group consisting of a filler, a reinforcement, a lubricator, a sliding agent, a conductive agent, an antistatic agent, a thermoplastic resin, a thermoplastic elastomer and a core-shell polymer; and (c) 0 to 5 parts by weight of a colorant, to 100 parts by weight of the stabilized polyacetal resin.

The additives such as scavenger, antioxidant or stabilizer are preferably and generally added to the polyacetal resin after the terminal stabilization treatment, thus melting and kneading them together to form the polyacetal resin composition. However, they can be added to the raw material monomer and comonomer, or added to the resin in the polymerization step within a range not inversely affecting the efficiency of polymerization, catalyst deactivation, terminal stabilization, and the like. Furthermore, they can be added to the polymer being treated by the terminal stabilization after polymerization, or added in an arbitrary stage in the terminal stabilization step.

Specifically, the polyacetal resin composition according to the present invention preferably contains the above-antioxidant by a quantity of 0.01 to 1 part by weight of at least one substance selected from a hindered phenol-based antioxidant, a hindered amine-based antioxidant, a phosphorus-based secondary antioxidant, and a sulfur-based secondary antioxidant, to 100 parts by weight of the stabilized polyacetal resin.

Preferably the quantity of the formaldehyde scavenger is 0.01 to 2 parts by weight of at least one substance selected from the group consisting of an aminotriazine compound, a urea compound, a guanidine compound, a hydrazine compound, an amino acid compound, an amino alcohol compound, an imide compound, an azole compound, an amide compound, a polyamide compound, a polyacrylamide compound, and a polyurethane resin, to 100 parts by weight of the stabilized polyacetal resin.

Examples of the aminotriazine compound are melamine, benzoguanamine, CTU-guanamine, 2,4-diamino-6-(2'-methylimidazolyl-1')-ethyl-s-triazine, 2,4-diamino-6-(2'-undecylimidazolyl-1')-ethyl-s-triazine, 2,4-diamino-6-(2'-ethyl-4'-methylimidazolyl-1')-ethyl-s-triazine and melamine resin.

Examples of the urea compound are urea, ethylene urea, propylene urea, glycol uryl, barbituric acid, uric acid, benzoimidazolone, formnitrogen, biuret, biurea, hydantoin, 5,5-dimethylhydantoin, allantoin and allantoin salt (such as allantoin dihydroxyaluminum or amino acid salt of allantoin).

Examples of the guanidine compound are cyanoguanidine, glycocyamidine and creatinine.

Examples of the hydrazine compound are urazole, 4-amino urazole, lauric acid hydrazide, stearic acid hydrazide, 12-hydroxy stearic acid hydrazide, adipic acid hydrazide, sebacic acid dihydrazide, dodecane dioxo dihydrazide, eicosane dioxo dihydrazide, 8,12-eicosadiene dioxo dihydrazide, 1,4-cyclohexane dicarboxylic acid dihydrazide, 1,3-bis(2-hydrazynocarbonylethyl)-5-isopropyl hydantoin, benzoic acid hydrazide, α-naphthoic acid hydrazide, β-naphthoic acid hydrazide, isophthalic acid dihydrazide, terephthalic acid dihydrazide and 2,6-naphthalene dicarboxylic acid dihydrazide.

Examples of amino acid compound are α-amino acid, β-amino acid, γ-amino acid, δ-amino acid and aromatic amino acid. Examples of α-amino acid are mono-amino mono-carboxylic acid (such as glycine, alanine, valine, norvaline, leucine, norleucine, isoleucine, phenylalanine, tyrosine, di-iodo tyrosine, surinamine, threonine, serine, proline, hydroxyproline, tryptophan, methionine, cystine, cysteine, citrulline, α-amino butyric acid, hexahydropicolinic acid, theanine, o-tyrosine, m-tyrosine or 3,4-dihydroxyphenyl alanine), mono-amino carboxylic acid (such as aspartic acid, glutamic acid, asparagine, glutamine, hexahydrodipicolic acid or hexahydroquinolic acid) and diamino-mono-carboxylic acid (such as lysine, hydroxylysine, arginine or and histidine). Examples of β-amino acid, γ-amino acid, and δ-amino acid are β-alanine, β-amino butyric acid, hexahydrocinchomeronic acid, γ-amino butyric acid, and δ-amino-n-valerianic acid. Examples of aromatic amino acid are o-amino benzoic acid, m-amino benzoic acid, and p-amino benzoic acid. Those amino acids may be D-type, L-type, or DL-type. These amino acids also include amino acid derivative in which the carboxylic group is converted to metal salt (such as alkali metal salt or alkali earth metal salt), to amide, to hydrazide, and to ester (such as methyl ester or ethyl ester).

Examples of amino alcohol compound are monoethanol amine, dimethanol amine, 2-amino-1-butanol, 2-amino-2-methyl-1-propanol, 2-amino-2-methyl-1,3-propane diol, 2-amino-2-ethyl-1,3-propane diol, and tris (hydroxymethyl) amino methane.

Examples of the imido compound are succin-imide, phthal imide, trimellitic acid imide, pyromellitic acid imide and pyromellitic acid diimide.

Examples of the azole compound are 4-amino-1,2,4-triazole, benzoimidazole, guanine, benzotriazole and 5-phenyl-1H-tetrazole.

Examples of the amide compound are malon amide, adipic acid amide, sebacic acid amide, dodecane dioxo amide, benzoic acid amide and anthranyl amide.

Examples of the polyamide resin are nylon 3, nylon 6, nylon 66, nylon 6-66-610, and nylon 6-66-610-12.

The polyacetal resin composition according to the present invention preferably contains the formic acid scavenger (heat resistant stabilizer) by a quantity of 0. 001 to 1 part by weight to 100 parts by weight of stabilized polyacetal resin, which formic acid scavenger is one or more substance selected from the group consisting of fatty acid metal salt which may contain hydroxyl group, poly (meth) acrylic acid (co) polymer metal salt, aminocarboxylic acid metal salt, (iso) cyanulic acid metal salt, silicic acid metal salt (such as talc and zeolite), hydrotalcite, magnesium hydroxide, and magnesium oxide.

Examples of the fatty acid metal salt are calcium acetate, calcium propionate, calcium citrate, calcium stearate, calcium 12-hydroxystearate, magnesium stearate, zinc stearate, and lithium stearate.

The polyacetal resin composition according to the present invention preferably contains the processing stabilizer by a quantity of 0.01 to 1 part by weight to 100 parts by weight of the stabilized polyacetal resin, which processing stabilizer is at least one substance selected from the group consisting of any of C12 to C36 fatty acid esters, fatty acid amide, polyalkylene glycol, polysiloxane, and low molecular weight polyethylene.

Examples of the fatty acid ester are ethylene glycol mono-di-stearate, glycerin mono-tri-stearate, and pentaerythritol mono~tetra-stearate. An example of fatty acid amide is ethylenebisstearyl amide.

The stabilized polyacetal resin or the polyacetal resin composition according to the present invention can be formed into molded articles by injection molding, extrusion molding, blow molding, press molding, gas-injection molding, foaming molding, and the like.

Regarding the molded article prepared by the present invention, (1) after stored in a sealed space at 80°C for 24 hours, the polyacetal molded article generates formaldehyde in a quantity of 2 µg or smaller per 1 cm² of surface area of the molded article, preferably 0.001 to 1.0 µg, and/or (2) after stored in a sealed space at 60°C and saturated humidity for 3 hours, the polyacetal molded article generates formaldehyde in a quantity of 0.8 µg or smaller per 1 cm² of surface area of the molded article, preferably 0.001 to 0.6 µg.

The molded article prepared by the present invention is used as automobile parts, electric and electronic parts, OA parts, building and piping parts, household and cosmetic parts, and medical parts.

### Examples

The present invention is described below referring to the examples. The present invention, however, is not limited to the examples.

The method for determining the (evaluation characteristics of the stabilized polyacetal resin) which is adopted as the quality index in the manufacturing examples and the method for determining the (evaluation characteristics of the stabilized polyacetal resin composition) which is adopted as the quality index in the examples are given below.

### (Method for determining the evaluation characteristics of the stabilized polyacetal resin)

### 1. Quantity of hemiacetal terminal group and quantity of formyl terminal group

A polyoxymethylene copolymer was dissolved in hexafluoroisopropyl alcohol. To the dissolved solution, N,O-bis(trimethylsilyl)trifluoroacetoamide and pyridine were added to conduct reaction. After that, the reacted products were air-dried, followed by drying under reduced pressure at 40°C to remove the residual solvent and unreacted substances. Thus obtained reacted products were dissolved in deuterated hexafluoroisopropyl alcohol as the solvent to a concentration of 5% by weight. The solution was filled in an NMR sample tube to determine the NMR spectra at room temperature, (refer to JP-A-2001-11143).

The quantity of hemiacetal terminal group (mmol/kg) and the quantity of formyl terminal group (mmol/kg) were calculated from the respective corresponding NMR absorption peaks.

NMR apparatus: FT-NMR of AVANCE 400 model, manufactured by Bruker.

Measurement conditions: Pulse flip angle: 30°, Repeating time for estimation: 10 sec, Number of estimations: 128.

### 2. Quantity of unstable terminal group (quantity of unstable portion at terminal)

About 1 g of polyacetal copolymer was accurately weighed, which was then put in a pressure-sealing vessel together with 15 mg of calcium hydroxide and 100 ml of 60 vol. % methanol aqueous solution containing 0.5 vol.% of ammonium hydroxide. The mixture was subjected to heat treatment at 170°C for 60 minutes. After that, the mixture was cooled and taken out from the vessel. The quantity of formaldehyde which was generated by the decomposition of unstable terminal portion and was dissolved in the solution was determined by the absorptiometry of acetyl acetone, specified in Article 29.1 of JIS K0102, and the ratio thereof to the polyacetal copolymer was calculated as weight percentage.

### (Method for determining the evaluation characteristics of the stabilized polyacetal resin composition)

### 1. Quantity of generated formaldehyde in wet process

A 1 liter polyethylene bottle was filled with 50 ml of distilled water. To the inside face of the lid, two pieces of plate test specimens (100 mm x 40 mm x 2 mm, 85.6 cm² of total surface area) were hung to seal the bottle. The bottle was put in a thermostat at 60°C to conduct heat treatment for a period of 3 hours. After that, the bottle was taken out from the thermostat and was allowed to stand at 20°C for 1 hour.

The quantity of formaldehyde which was released from the specimens and was dissolved in water during heat treatment was determined, and the quantity of generated formaldehyde per unit surface area, (µg/cm²), was calculated.

### 2. Quantity of generated formaldehyde in dry process

Ten pieces of test specimens (2 mm x 2 mm x 50 mm, about 40 cm² of total surface area) were put in a 20 ml vessel to seal. The sealed vessel was subjected to heat treatment in a thermostat at 80°C for 24 hours. After that, the vessel was taken out from the thermostat and was allowed to stand at 20°C for 1 hour. A 5 ml of distilled water was poured into the vessel using a syringe to let the formaldehyde released from the specimens during heat treatment absorb into water. The quantity of formaldehyde dissolved in water was determined, and the quantity of generated formaldehyde per unit surface area, (µg/cm²), was calculated.

### (Preparation of crude polyacetal copolymer (A) for stabilization treatment)

The following-described polymerization was conducted using a continuous mixing reactor which had a barrel equipped with a jacket, and two rotary shafts each of which had agitating and transferring paddles in the longitudinal direction of the barrel.

Hot water at 80°C was introduced into the jacket. The two rotary shafts were rotated at 100 rpm. To the reactor, there were continuously fed 0.05 wt.% of triethyleneglycol-bis[3-(3-t-butyl-5-methyl-4-hydroxyphenyl)propionate] as the antioxidant, 3.3 wt.% of 1,3-dioxolane as the comonomer, and trioxane containing 700 ppm (weight basis) of methylal as the chain-transfer agent. Simultaneously, there were continuously fed a 1 wt.% solution of cyclohexane containing dissolved trifluoroboron dibutyl etherat at a concentration of 10 ppm (weight basis) as trifluoroboron to the total quantity of monomers (sum of trioxane and 1,3-dioxolane), thus conducted the copolymerization. Then, the crude polyacetal copolymer which was discharged from the discharge opening of the reactor was added to a 0.1 wt.% aqueous solution of triethylamine to deactivate the catalyst. Thus prepared mixture was then treated by centrifugation and drying to obtain the crude polyacetal copolymer (A).

The crude polyacetal copolymer (A) had the quantity of hemiacetal terminal group of 2.2 mmol/kg, the quantity of formyl terminal group of 1.5 mmol/kg, and the quantity of unstable terminal (quantity of unstable portion at terminal) of 0.87% by weight.

The following is separate descriptions about (1) the Manufacturing Examples and the Comparative Manufacturing Examples for the stabilized polyacetal resin, and (2) the Examples and the Comparative Examples for the composition and the molded article thereof using the stabilized polyacetal resin.

### (1) Manufacturing Examples and Comparative Manufacturing Examples for the stabilized polyacetal resin

### (Manufacturing Examples 1 to 6)

To 100 parts by weight of the above crude polyacetal copolymer (A), there were added 0.03 parts by weight of pentaerythritol tetrakis[3-(3,5-di-t-butyl-4-hydroxyphenyl)propionate] and 2 parts by weight of aqueous solution of heterocyclic quaternary ammonium salt, which were then uniformly mixed. By adding 2 parts by weight of the aqueous solution of heterocyclic quaternary ammonium salt, the quantity of the added heterocyclic quaternary ammonium salt was adjusted to 0.7 mmol as the quaternary ammonium nitrogen to 1 kg of the crude polyacetal copolymer.

Thus prepared mixture was then fed to a twin screw extruder (30 mm in diameter) equipped with a vent opening. The melting and kneading of the fed mixture were conducted in the extruder under the conditions of 2.7 kPa (20 mmHg) of vent vacuum, 200°C of cylinder temperature, and 300 sec of average retention time, while venting the vaporized matter from the vent opening. Thus the stabilized polyacetal copolymer in pellet shape was obtained. The result is given in Table 1.

### (Manufacturing Example 7)

To 100 parts by weight of the above crude polyacetal copolymer (A), there were added 0.3 parts by weight of triethyleneglycol-bis[3-(3-t-butyl-5-methyl-4-hydroxyphenyl)propionate] and 2 parts by weight of aqueous solution of heterocyclic quaternary ammonium salt, which were then uniformly mixed. By adding 2 parts by weight of the aqueous solution of heterocyclic quaternary ammonium salt, the quantity of the added heterocyclic quaternary ammonium salt was adjusted to become 1.4 mmol as the quaternary ammonium nitrogen to 1 kg of the crude polyacetal copolymer.

Thus prepared mixture was then fed to a twin screw extruder (30 mm in diameter) equipped with a vent opening. The melting and kneading of the fed mixture were conducted in the extruder under the conditions of 2.7 kPa (20 mmHg) of vent vacuum, 200°C of cylinder temperature, and 300 sec of average retention time, while venting the vaporized matter from the vent opening. Thus the stabilized polyacetal copolymer in pellet shape was obtained. The result is given in Table 1.

### (Manufacturing Example 8)

To 100 parts by weight of the above crude polyacetal copolymer (A), there was added 2 parts by weight of aqueous solution of heterocyclic quaternary ammonium salt and formate of choline [2-hydroxyethyltrimethylammonium salt of formic acid], which were then uniformly mixed. By adding 2 parts by weight of the aqueous solution of heterocyclic quaternary ammonium salt and formate of choline, the quantity of the added heterocyclic quaternary ammonium salt was adjusted to 0.3 mmol as the quaternary ammonium nitrogen, and the quantity of the added formate of choline to become 0.3 mmol as the quaternary ammonium nitrogen, to 1 kg of the crude polyacetal copolymer.

Thus prepared mixture was then fed to a twin screw extruder (30 mm in diameter) equipped with a vent opening. The melting and kneading of the fed mixture were conducted in the extruder under the conditions of 2.7 kPa (20 mmHg) of vent vacuum, 200°C of cylinder temperature, and 300 sec of average retention time, while venting the vaporized matter from the vent opening. Thus the stabilized polyacetal copolymer in pellet shape was obtained. The result is given in Table 1.

### (Comparative Manufacturing Example 1)

To 100 parts by weight of the above crude polyacetal copolymer (A), there were added 0.03 parts by weight of pentaerythritol tetrakis[3-(3,5-di-t-butyl-4-hydroxyphenyl)propionate] and 2 parts by weight of aqueous solution of triethylamine (abbreviated to TEA), (0.72wt.%; TEA of 1.4 mmol as tertiary amine nitrogen per 1 kg of crude polyacetal copolymer), which were then uniformly mixed.

Thus prepared mixture was then fed to the twin screw extruder used in Manufacturing Example 1. The melting and kneading of the fed mixture were conducted in the extruder under the conditions of 20 mmHg (2.7 kPa) of vent vacuum, 200°C of cylinder temperature, and 300 sec of average retention time, while venting the vaporized matter from the vent opening. Thus the stabilized polyacetal copolymer in pellet shape was obtained. The result is given in Table 1.

The heterocyclic quaternary ammonium salt as the agent to decompose the unstable terminal group, used in Manufacturing Examples are the following.
(A-1): methyl carbonate of N,N-dimethylpyrrolidinium
(A-2): formate of N,N-dimethylpyrrolidinium
(A-3): ethyl acetoacetate salt of N,N-dimethylpyrrolidinium
(A-4): phenol salt of 1-(2-hydroxypropyl)-1,4-diazacyclo[2,2,2]octane
(A-5): methyl carbonate of 1-methyl-1,5-diazabicyclo[4,3,0]nonene-5
(A-6): methyl carbonate of N-methylpyridinium
(A-7): N,N-dimethylmorpholine hydroxide

**Table 1**

| | Manufacturing Example | | | | | | | | Comparative Manufacturing Example |
|---|---|---|---|---|---|---|---|---|---|
| | 1 | 2 | 3 | 4 | 5 | 6 | 7 | 8 | 1 |
| Decomposition agent | A-1 | A-2 | A-3 | A-4 | A-5 | A-6 | A-7 | A-2 | TEA |
| Stabilized copolymer | a-1 | a-2 | a-3 | a-4 | a-5 | a-6 | a-7 | a-8 | a-T |
| Quantity of hemiacetal terminal group (mmmol/kg) | 0.5 | 0.6 | 0.4 | 0.5 | 0.4 | 1.2 | 0.4 | 0.3 | 1.7 |
| Quantity of formyl terminal group (mmol/kg) | 0.2 | 0.5 | 0.2 | 0.3 | 0.3 | 1 | 0.2 | 0.2 | 1.4 |
| Quantity of unstable terminal (wt.%) | 0.2 | 0.2 | 0.2 | 0.2 | 0.2 | 0.3 | 0.18 | 0.15 | 0.74 |

### (2) Examples and Comparative Examples for the stabilized polyacetal resin composition and for the molded article thereof

### (Examples 1 to 7)

To the stabilized polyacetal copolymer obtained from the above Manufacturing Examples, there were mixed a formaldehyde scavenger, an antioxidant, a processing stabilizer, and a heat-resistant stabilizer at the respective ratios given in Table 2. The mixture was melted and kneaded in a twin-screw extruder (30 mm in diameter) equipped with a vent opening, thus obtained the respective polyacetal resin compositions in pellet shape.

Using an injection molding machine, thus obtained pellets were formed into specific test specimens. The quantity of generated formaldehyde for the test specimens was determined applying the above-given evaluation method. The result is given in Table 2.

### (Comparative Example 1)

To the stabilized polyacetal copolymer (a-T) obtained in the above Comparative Manufacturing Example 1, there were mixed a formaldehyde scavenger, an antioxidant, a processing stabilizer, and a heat-resistant stabilizer at the respective ratios given in Table 2. The mixture was melted and kneaded in a twin-screw extruder used in above Examples, thereby obtained the respective polyacetal resin compositions in pellet shape.

Test specimens were formed from the pellets. The quantity of formaldehyde generated from the test specimens was determined. The result is given in Table 2.

The formaldehyde scavenger, the hindered phenol-based compound, the hindered amine-based compound, the processing stabilizer, and the heat-resistant stabilizer used in Examples and Comparative Example are the following.

The melt index was determined in accordance with ASTM-D1238 under the condition of 190°C and 2160 g of load, expressing by the unit of g/10 min.

### (Formaldehyde scavenger b)

(b-1): melamine
(b-2): benzoguanamine
(b-3) : CTU-guanamine (manufactured by Aj inomoto Fine Techno Co., Inc.)
(b-4): allantoin
(b-5): biurea
(b-6): sebacic acid dihydrazide
(b-7): nylon 66 (3 µm of mean particle diameter)
(b-8): dodecane dioxy dihydrazide

### (Antioxidant c)

(c-1): pentaerythritol tetrakis[3-(3,5-di-t-butyl-4-hydroxyphenyl)propionate]
(c-2): triethyleneglycol bis[3-(3-t-butyl-5-methyl-4-hydroxyphenyl)propionate]

### (Processing stabilizer d)

(d-1): ethylene bisstearylamide
(d-2): glycerin monostearate
(d-3): ethylene glycol distearate

### (Heat-resistant stabilizer (organic carboxylic acid metal salt, alkali earth metal salt) e)

(e-1): calcium 12-hydroxystearate
(e-2): magnesium oxide
(e-3): calcium citrate
(e-4): calcium stearate

**Table 2**

| | *Examples* | | | | | | | *Comparative Example* |
|---|---|---|---|---|---|---|---|---|
| | *1* | *2* | *3* | *4* | *5* | *6* | *7* | *1* |
| *Stabilized polyacetal copolymer a parts by weight* | *a-1* | *a-2* | *a-3* | *a-1* | *a-2* | *a-3* | *a-1* | *a-T* |
| | *100* | *100* | *100* | *100* | *100* | *100* | *100* | *100* |
| *Formaldehyde scavenger b parts by weight* | *b-1* | *b-2* | *b-3* | *b-4* | *b-5* | *b-6 & b-7* | *b-8* | *a-T* |
| | *0* | *0.3* | *0.5* | *0.1* | *0.1* | *0.1 & 0. 05* | *0.1* | |
| *Antioxidant c parts by weight* | *c-1* | *c-2* | *c-2* | *c-2* | *c-1* | *c-1* | *c-1* | *c-1* |
| | *0.2* | *0.2* | *0.2* | *0.2* | *0.2* | *0.2* | *0.2* | *0.2* |
| *Processing stabilizer d parts by weight* | *d-1* | *d-1* | *d-1* | *d-2* | *d-3* | *d-3* | *d-1* | *d-1* |
| | *0.2* | *0.2* | *0.2* | *0.2* | *0.2* | *0.2* | *0.2* | *0.2* |
| *Heat-resistant stabilizer e parts by weight* | *e-1* | *e-1* | *e-1* | *e-2* | *e-3* | *e-4* | *e-4* | *e-1* |
| | *0.1* | *0.1* | *0.1* | *0* | *0.1* | *0.05* | *0.1* | *0.1* |
| *Quantity of generated formaldehyde (wet process)* µ*g*/*cm²* | *0.4* | *0.2* | *0.2* | *0.1* | *0.1* | *0.07* | *0.1* | *0.94* |
| *Quantity of generated formaldehyde (drv process)* µ*g*/*cm²* | *0.8* | *0.3* | *0.2* | *0.1* | *0.1* | *0.04* | *0.1* | *2.41* |

## Claims

1. A method for manufacturing a stabilized polyacetal resin, comprising the step of applying heat treatment to a polyacetal resin having an unstable terminal group in the presence of an agent added to decompose the unstable terminal group, which agent is composed of a heterocyclic quaternary ammonium salt to decrease the unstable terminal group,
wherein the polyacetal resin is a polyoxymethane copolymer obtained by copolymerizing trioxane as the main monomer with a cyclic ether and/or a cyclic formal as the comonomer in the presence of a cationic polymerization catalyst and the heat treatment temperature is in a range of from the melting point of the polyacetal resin to 250°C, and the heat treatment time is in a range of from 20 seconds to 20 minutes.

2. The method for manufacturing the stabilized polyacetal resin according to claim 1, wherein the agent to decompose the unstable terminal group is a non-arpmatic heterocyclic quaternary ammonium salt or an aromatic heterocyclic quaternary ammonium salt.

3. The method for manufacturing the stabilized polyacetal resin according to claim 1, wherein the agent to decompose the unstable terminal group is a heterocyclic quaternary ammonium salt represented by the formula (1):
**[R¹R²R³R⁴N⁺]ₙYⁿ⁻** (1)
wherein two or three or all of R¹ to R⁴ form a heterocyclic ring together with N⁺ atom; among R¹ to R⁴, the one not contributing to the formation of the heterocyclic ring is any of C 1 to C20 hydrocarbon groups which may contain a substituent; the hydrocarbon group is a linear or branched alkyl group, cycloalkyl group, aryl group or aralkyl group; the substituent includes hydroxy group, acyl group, acyloxy group, alkoxy group, alkoxycarbonyl group, carboxyl group, amino group, amide group, vinyl group, allyl group, hydroxyalkyloxy group, alkoxyalkyloxy group, and/or polyalkyleneoxy group; Yⁿ⁻ is a pair anion; n is an integer of 1 or larger; and n quantity of [R¹R²R³R⁴N⁺] may be different from each other.

4. The method for manufacturing the stabilized polyacetal resin according to claim 1, wherein the agent to decompose the unstable terminal group is at least one heterocyclic quaternary ammonium salt selected from the group consisting of a hydroxide, a (hydrogen) carbonate, an organic carbonate, an organic carboxylate, an organic sulfonate, an organic phosphonate, an organic phosphinate, a salt of acidic amide compound, a salt of acidic enol compound, a salt of phenol compound, a salt of alcoholic compound, a salt of acidic azole compound, a salt of hydroacid, a salt of oxoacid and a double salt or complex salt of heterocyclic quaternary ammonium.

5. The method for manufacturing the stabilized polyacetal resin according to claim 1, wherein the agent to decompose the unstable terminal group is at least one heterocyclic quaternary ammonium salt selected from the group consisting of a pyrrolidinium salt, a piperidinium salt, a piperazinium salt, a morpholinium salt, an imidazolinium salt, a bicyclo-based quaternary ammonium salt, a spiro-based quaternary ammonium salt and a pyridinium salt.

6. The method for manufacturing the stabilized polyacetal resin according to claim 1, wherein the agent to decompose the unstable terminal group is at least one heterocyclic quaternary ammonium salt selected from the group consisting of a hydroxide, a (hydrogen) carbonate, an organic carbonate, an organic carboxylate, an organic sulfonate, an organic phosphonate, an organic phosphinate, a salt of acidic amide compound, a salt of acidic enol compound, a salt of phenol compound, a salt of alcoholic compound, a salt of acidic azole compound, a salt of hydroacid, a salt of oxoacid, and a double salt or complex salt, of at least one heterocyclic quaternary ammonium selected from the group consisting of pyrrolidinium, piperidinium, piperazinium, morpholinium, imidazolinium, bicyclo-based quaternary ammonium, spiro-based quaternary ammonium and pyridinium.

7. The method for manufacturing the stabilized polyacetal resin according to claim 3, wherein the heterocyclic quaternary ammonium salt represented by the formula (1) contains an organic group not contributing to the formation of heterocyclic ring, as at least one of R¹ to R⁴, and the organic group is at least one substance selected from the group consisting of any of C1 to C10 alkyl groups, any of C1 to C4 hydroxylalkyl groups and any of C2 to C4 alkoxyalkyl groups.

8. The method for manufacturing the stabilized polyacetal resin according to any of claims 1 to 7, further comprising the step of applying heat treatment with the addition of at least one of a proton acid and an alkali metal compound or an alkaline earth metal compound in the presence of an agent to decompose the unstable terminal group, which agent is composed of a heterocyclic quaternary ammonium salt.

9. The method for manufacturing the stabilized polyacetal resin according to claim 8, wherein the proton acid is selected from the group consisting of an organic carboxylic acid, an acidic amide compound, an acidic enol compound, a phenol compound, a hydroacid and an oxoacid; and the alkali metal compound or the alkaline earth metal compound is selected from the group consisting of a hydroxide of an alkaline earth metal, an oxide of an alkaline earth metal, a carbonate of an alkaline earth metal and an alkaline earth metal salt of a fatty acid which may contain hydroxyl group.

10. The method for manufacturing the stabilized polyacetal resin according to any of claims 1 to 9, wherein a step of applying heat treatment is conducted in the co-presence of at least one additive selected from the group consisting of an antioxidant, water, an alcohol, a tertiary amine and a non-heterocyclic quaternary ammonium salt.

11. The method for manufacturing the stabilized polyacetal resin according to any of claims 8 to 10, further comprising steps of:
preliminarily mixing the agent to decompose the unstable terminal group with at least one substance selected from the group consisting of a proton acid and an alkali metal compound or an alkaline earth metal compound,
and/or at least one substance selected from the group consisting of an antioxidant, water, an alcohol, a tertiary amine and a non-heterocyclic quaternary ammonium salt; and applying heat treatment in the presence of the prepared mixture.

12. The method for manufacturing the stabilized polyacetal resin according to any of claims 1 to 11, wherein the use quantity of the agent to decompose the unstable terminal group is 0.005 to 3.5 mmol as nitrogen atom (N⁺) providing the heterocyclic quaternary ammonium salt to 1 kg of the polyacetal resin containing the unstable terminal group.

13. The method for manufacturing the stabilized polyacetal resin according to any of claims 1 to 12, wherein the quantity of hemiacetal terminal group of the stabilized polyacetal resin is 1.0 mmol/kg or smaller and/or the quantity of formyl terminal group is 1.2 mmol/kg or smaller.

## Patentansprüche

1. Ein Herstellungsverfahren für ein stabilisiertes Polyacetalharz bestehend aus den Schritten der Anwendung von Wärmebehandlung eines Polyacetalharzes mit einer instabilen Endgruppe in Gegenwart eines Mittels, das zur Zersetzung der instabilen Endgruppe zugegeben wird, wobei sich das Mittel aus einem heterozyklischen, quaternären Ammoniumsalz zur Schwächung der instabilen Endgruppe zusammensetzt;
wobei es sich beim Polyacetalharz um ein Polyoxymethan-Copolymer handelt, das durch Copolimerisation von Trioxan als Hauptmonomer mit einem zyklischen Ether und/oder einem zyklischen Formal als Comonomer in Gegenwart eines kationischen Polimerisationskatalysators erhalten wird, und die Wärmebehandlung im Bereich vom Schmelzpunkt des Polyacetalharzes bis 250°C stattfindet und die Wärmebehandlungszeit im Bereich von 20 Sekunden bis zu 20 Minuten liegt.

2. Das Herstellungsverfahren des stabilisierten Polyacetalharzes entsprechend Anspruch 1, wobei das Mittel zur Zersetzung der instabilen Endgruppe ein nicht aromatisches heterozyklisches quaternäres Ammoniumsalz oder ein aromatisches heterozyklisches quaternäres Ammoniumsalz ist.

3. Das Herstellungsverfahren des stabilisierten Polyacetalharzes entsprechend Anspruch 1, wobei das Mittel zur Zersetzung der instabilen Endgruppe ein heterozyklisches quaternäres Ammoniumsalz ist, das durch folgende Formel (1) repräsentiert wird:
[R¹R²R³R⁴N⁺]ₙYⁿ⁻ (1)
wobei zwei oder drei oder alle von R¹ bis R⁴ zusammen einen heterozyklischen Ring mit N⁺ Atom bilden; von R¹ bis R⁴ dasjenige, das nicht zur Bildung des heterozyklischen Rings beiträgt, eine von C1- bis C20-Kohlenwasserstoffgruppen ist, die einen Substituenten enthalten können; die Kohlenwasserstoffgruppe eine lineare oder verzweigte Alkylgruppe, Cycloalkylgruppe, Arylgruppe oder Aralkylgruppe ist; zum Substituenten eine Hydroxalgruppe, Acylgruppe, Acyloxygruppe, Alkoxygruppe, Alkoxycarbonylgruppe, Carboxylgruppe, Aminogruppe, Amidgruppe, Vinylgruppe, Allylgruppe, Hydroxyalkyloxygruppe, Alkoxyalkyloxygruppe und/oder Polyalkylenoxygruppe gehört; Yⁿ⁻ in Paaranion ist, n eine ganze Zahl von 1 oder größer ist und n-Quantität von [R¹R²R³R⁴N⁺] jeweils unterschiedlich sein kann.

4. Das Herstellungsverfahren des stabilisierten Polyacetalharzes entsprechend Anspruch 1, wobei das Mittel zur Zersetzung der instabilen Endgruppe zumindest ein heterozyklisches quaternäres Ammoniumsalz ist, das aus der Gruppe bestehend aus einem Hydroxid, einem (Wasserstoff)-Carbonat, einem organischen Carbonat, einem organische Carboxylat, einem organischen Sulfonat, einem organische Phosphonat, einem organischen Phosphinat, einem Salz einer säurehaltigen Amidverbindung, einem Salz einer säurehaltigen Enolverbindung, einem Salz einer Phenolverbindung, einem Salz einer alkoholischen Verbindung, einem Salz einer säurehaltigen Azolverbindung, einem Salz einer Hydrosäure, einem Salz einer Oxosäure und einem Doppelsalz oder Komplex von heterozyklischem quaternärem Ammonium ausgewählt wird.

5. Das Herstellungsverfahren des stabilisierten Polyacetalharzes entsprechend Anspruch 1, wobei das Mittel zur Zersetzung der instabilen Endgruppe zumindest ein heterozyklisches quaternäres Ammoniumsalz ist, das aus der Gruppe bestehend aus einem Pyrrolidiniumsalz, einem Piperidiniumsalz, einem Piperaziniumsalz, einem Morpholiniumsalz, einem Imidazoliniumsalz, einem quaternärem Ammoniumsalz auf bizyklischer Basis, einem quaternären Ammoniumsalz auf Spirobasis und einem Pyridiniumsalz ausgewählt wird.

6. Das Herstellungsverfahren des stabilisierten Polyacetalharzes entsprechend Anspruch 1, wobei das Mittel zur Zersetzung der instabilen Endgruppe zumindest ein heterozyklisches quaternäres Ammoniumsalz ist, das aus der Gruppe bestehend auf Folgenden ausgewählt wird, nämlich einem Hydroxid, einem (Wasserstoff)-Carbonat, einem organischen Carbonat, einem organische Carboxylat, einem organischen Sulfonat, einem organische Phosphonat, einem organischen Phosphinat, einem Salz einer säurehaltigen Amidverbindung, einem Salz einer säurehaltigen Enolverbindung, einem Salz einer Phenolverbindung, einem Salz einer alkoholischen Verbindung, einem Salz einer säurehaltigen Azolverbindung, einem Salz einer Hydrosäure, einem Salz einer Oxosäure und einem Doppelsalz oder Komplex von heterozyklischem quaternärem Ammonium, das aus der Gruppe bestehend aus Pyrrolidinium, Piperidinium, Piperazinium, Morpholinium, Imidazolinium, quaternärem Ammonium auf bizyklischer Basis, quaternärem Ammonium auf Spirobasis und Pyridinium ausgewählt wird.

7. Das Herstellungsverfahren des stabilisierten Polyacetalharzes entsprechend Anspruch 3, wobei das heterozyklische quaternäre Ammoniumsalz, dass durch die Formel (1) repräsentiert wird, eine organische Gruppe enthält, die nicht zur Bildung eines heterozyklischen Rings beiträgt, da zumindest eines von R¹ bis R⁴ und die organische Gruppe zumindest eine Substanz ist, das/die von der Gruppe bestehend aus einer von C1-bis C10-Alkylgruppen, einer von C1- bis C4-Hydroxylgruppen und einer von C2- bis C4-Alkoxyalkylgruppen ausgewählt wird.

8. Das Herstellungsverfahren des stabilisierten Polyacetalharzes entsprechend einer der Ansprüche 1 bis 7, zu dem weiterhin der Schritt der Anwendung einer Wärmebehandlung mit Zusatz von mindestens einer Protonsäure und einer alkalischen Metallverbindung oder einer alkalischen Erdmetallverbindung in Gegenwart eines Mittels zur Zersetzung der instabilen Endgruppe gehört, wobei sich das Mittel aus einem heterozyklischen quaternären Ammoniumsalz zusammensetzt.

9. Das Herstellungsverfahren des stabilisierten Polyacetalharzes entsprechend Anspruch 8, wobei die Protonsäure aus der Gruppe bestehend aus Folgenden ausgewählt wird, nämlich einer organischen Carbonsäure, einer säurehaltigen Amidverbindung, einer säurehaltigen Enolverbindung, einer Phenolverbindung, einer Hydrosäure und einer Oxosäure; und die alkalische Metallverbindung oder die alkalische Erdmetallverbindung aus der Gruppe bestehend aus einem Hydroxid eines alkalischen Erdmetalls, einem Oxid eines alkalischen Erdmetalls, einem Carbonat eines alkalischen Erdmetalls und einem alkalischen Erdmetallsalz und einer Fettsäure, die eine Hydroxylgruppe enthalten kann, ausgewählt wird.

10. Das Herstellungsverfahren des stabilisierten Polyacetalharzes entsprechend einem der Ansprüche 1 bis 9, wobei der Schritt der Wärmebehandlung in Gegenwart von zumindest einem Zusatzstoff ausgeführt wird, der aus der Gruppe bestehend aus einem Antioxidans, Wasser, einem Alkohol, einem tertiären Amin und einem nicht heterozyklischen Ammoniumsalz ausgewählt wird.

11. Das Herstellungsverfahren des stabilisierten Polyacetalharzes entsprechend einem der Ansprüche 8 bis 10, zu dem weiterhin folgende Schritte gehören:
Vormischen des Mittels zur Zersetzung der instabilen Endgruppe mit zumindest einer Substanz, die aus der Gruppe bestehend aus Folgenden ausgewählt wird, nämlich einer Protonsäure und einer alkalischen Metallverbindung, oder einer alkalischen Erdmetallverbindung, und/oder zumindest einer Substanz, die aus der Gruppe bestehend aus einem Antioxidans, Wasser, einem Alkohol, einem tertiären Amin und einem nicht heterozyklischen quaternären Ammoniumsalz ausgewählt wird, sowie Anwendung von Wärmebehandlung in Gegenwart der vorbereiteten Mischung.

12. Das Herstellungsverfahren des stabilisierten Polyacetalharzes entsprechend einem der Ansprüche 1 bis 11, wobei die Gebrauchsmenge des Mittels zur Zersetzung der instabilen Endgruppe 0,005 bis 3,5 mmol als Stickstoffatom (N⁺) beträgt, um das heterozyklisches quaternäre Salz für 1 kg des Polyacetalharzes, das die instabile Endgruppe enthält, bereitzustellen.

13. Das Herstellungsverfahren des stabilisierten Polyacetalharzes entsprechend einem der Ansprüche 1 bis 12, wobei die Menge der Halbacetalendgruppe des stabilisierten Polyacetalharzes 1,0 mmol/kg oder weniger und/oder die Menge der Formylendgruppe 1,2 mmol/kg oder weniger beträgt.

## Revendications

1. Un procédé de fabrication d'une résine de polyacétal stabilisée, comprenant l'opération d'application d'un traitement thermique à une résine de polyacétal possédant un groupe terminal instable en présence d'un agent ajouté de façon à décomposer le groupe terminal instable, ledit agent étant composé d'un sel d'ammonium quaternaire hétérocyclique destiné à diminuer le groupe terminal instable,
où la résine de polyacétal est un copolymère de polyoxyméthane obtenu par copolymérisation de trioxane en tant que monomère principal avec un éther cyclique et/ou un formal cyclique en tant que comonomère en présence d'un catalyseur de polymérisation cationique et la température de traitement thermique se situe dans une plage allant du point de fusion de la résine de polyacétal à 250°C, et la durée de traitement thermique se situe dans une plage allant de 20 secondes à 20 minutes.

2. Le procédé de fabrication de la résine de polyacétal stabilisée selon la Revendication 1, où l'agent de décomposition du groupe terminal instable est un sel d'ammonium quaternaire hétérocyclique non aromatique ou un sel d'ammonium quaternaire hétérocyclique aromatique.

3. Le procédé de fabrication de la résine de polyacétal stabilisée selon la Revendication 1, où l'agent de décomposition du groupe terminal instable est un sel d'ammonium quaternaire hétérocyclique représenté par la formule (1) :
[R¹R²R³R⁴N⁺]ₙYⁿ⁻ (1)
où deux ou trois ou tous parmi R¹ à R⁴ forment un anneau hétérocyclique conjointement avec un atome N⁺ ; parmi R¹ à R⁴, celui ne contribuant pas à la formation de l'anneau hétérocyclique est l'un quelconque des groupes d'hydrocarbure C1 à C20 qui peut contenir un substituant, le groupe d'hydrocarbure est un groupe alkyle linéaire ou ramifié, un groupe cycloalkyle, un groupe aryle ou un groupe aralkyle, le substituant comprend un groupe hydroxyle, un groupe acyle, un groupe acyloxy, un groupe alkoxy, un groupe alkoxycarbonyle, un groupe carboxyle, un groupe amine, un groupe amide, un groupe vinyle, un groupe allyle, un groupe hydroxyalkyloxy, un groupe alkoxyalkyloxy et/ou un groupe polyalkylèneoxy, Yⁿ⁻ est un anion de paire, n est un entier de 1 ou plus, et n quantités de [R¹R²R³R⁴N⁺] peuvent être différents les uns des autres.

4. Le procédé de fabrication de la résine de polyacétal stabilisée selon la Revendication 1, où l'agent de décomposition du groupe terminal instable est au moins un sel d'ammonium quaternaire hétérocyclique sélectionné dans le groupe se composant d'un hydroxyde, un carbonate (d'hydrogène), un carbonate organique, un carboxylate organique, un sulfonate organique, un phosphonate organique, un phosphinate organique, un sel de composé amide acide, un sel de composé énolique acide, un sel de composé phénolique, un sel de composé alcoolique, un sel de composé azole acide, un sel d'hydroacide, un sel d'oxoacide et un sel double ou sel complexe d'ammonium quaternaire hétérocyclique.

5. Le procédé de fabrication de la résine de polyacétal stabilisée selon la Revendication 1, où l'agent de décomposition du groupe terminal instable est au moins un sel d'ammonium quaternaire hétérocyclique sélectionné dans le groupe se composant d'un sel de pyrrolidinium, un sel de pipéridinium, un sel de pipérazinium, un sel de morpholinium, un sel d'imidazolinium, un sel d'ammonium quaternaire de type bicyclo, un sel d'ammonium quaternaire de type spiro et un sel de pyridinium.

6. Le procédé de fabrication de la résine de polyacétal stabilisée selon la Revendication 1, où l'agent de décomposition du groupe terminal instable est au moins un sel d'ammonium quaternaire hétérocyclique sélectionné dans le groupe se composant d'un hydroxyde, un carbonate (d'hydrogène), un carbonate organique, un carboxylate organique, un sulfonate organique, un phosphonate organique, un phosphinate organique, un sel de composé amide acide, un sel de composé énolique acide, un sel de composé phénolique, un sel de composé alcoolique, un sel de composé azole acide, un sel d'hydroacide, un sel d'oxoacide et un sel double ou un sel complexe d'au moins un ammonium quaternaire hétérocyclique sélectionné dans le groupe se composant de pyrrolidinium, pipéridinium, pipérazinium, morpholinium, imidazolinium, ammonium quaternaire de type bicyclo, ammonium quaternaire de type spiro et pyridinium.

7. Le procédé de fabrication de la résine de polyacétal stabilisée selon la Revendication 3, où le sel d'ammonium quaternaire hétérocyclique représenté par la formule (1) contient un groupe organique ne contribuant pas à la formation de l'anneau hétérocyclique, en tant qu'au moins un de R¹ à R⁴, et le groupe organique est au moins une substance sélectionnée dans le groupe se composant de l'un quelconque des groupes alkyles C1 à C10, l'un quelconque des groupes hydroxylalkyles C1 à C4 et l'un quelconque des groupes alkoxyalkyles C2 à C4.

8. Le procédé de fabrication de la résine de polyacétal stabilisée selon l'une quelconque des Revendications 1 à 7, comprenant en outre l'opération d'application d'un traitement thermique avec l'ajout d'au moins un élément parmi un acide protonique et un composé de métal alcalin ou un composé de métal alcalino-terreux en présence d'un agent destiné à décomposer le groupe terminal instable, ledit agent étant un composé d'un sel d'ammonium quaternaire hétérocyclique.

9. Le procédé de fabrication de la résine de polyacétal stabilisée selon la Revendication 8, où l'acide protonique est sélectionné dans le groupe se composant d'un acide carboxylique organique, un composé amide acide, un composé énolique acide, un composé phénolique, un hydroacide et un oxoacide, et le composé de métal alcalin ou le composé de métal alcalino-terreux est sélectionné dans le groupe se composant d'un hydroxyde d'un métal alcalino-terreux, un oxyde d'un métal alcalino-terreux, un carbonate d'un métal alcalino-terreux et un sel de métal alcalino-terreux d'un acide gras qui peut contenir un groupe hydroxyle.

10. Le procédé de fabrication de la résine de polyacétal stabilisée selon l'une quelconque des Revendications 1 à 9, où une opération d'application d'un traitement thermique est conduite en co-présence d'au moins un additif sélectionné dans le groupe se composant d'un antioxydant, d'eau, d'un alcool, d'un amine tertiaire et d'un sel d'ammonium quaternaire non hétérocyclique.

11. Le procédé de fabrication de la résine de polyacétal stabilisée selon l'une quelconque des Revendications 8 à 10, comprenant en outre les opérations suivantes :
le mélange préliminaire de l'agent de façon à décomposer le groupe terminal instable avec au moins une substance sélectionnée dans le groupe se composant d'un acide protonique et d'un composé de métal alcalin ou d'un composé de métal alcalino-terreux, et/ou au moins d'une substance sélectionnée dans le groupe se composant d'un antioxydant, d'eau, d'un alcool, d'un amine tertiaire et d'un sel d'ammonium quaternaire non hétérocyclique, et
l'application d'un traitement thermique en présence du mélange préparé.

12. Le procédé de fabrication de la résine de polyacétal stabilisée selon l'une quelconque des Revendications 1 à 11, où la quantité d'utilisation de l'agent de décomposition du groupe terminal instable est de 0,005 à 3,5 mmol en tant qu'atome d'azote (N⁺) fournissant le sel d'ammonium quaternaire hétérocyclique à 1 kg de la résine de polyacétal contenant le groupe terminal instable.

13. Le procédé de fabrication de la résine de polyacétal stabilisée selon l'une quelconque des Revendications 1 à 12, où la quantité du groupe terminal hémi-acétal de la résine de polyacétal stabilisée est de 1,0 mmol/kg ou moins et/ou la quantité du groupe terminal formyle est de 1,2 mmol/kg ou moins.
